# EUROPEAN PATENT SPECIFICATION

(11) **EP 3 461 087 B1**
(45) Date of publication and mention of the grant of the patent: **21.10.2020**
(21) Application number: 16905047.3
(22) Date of filing: 16.06.2016
(51) Int. Cl.: H04L 12/917, H04L 12/24, H04L 12/911, H04L 12/715

(54) **NETWORK-SLICE RESOURCE MANAGEMENT METHOD AND APPARATUS**
VERFAHREN UND VORRICHTUNG ZUR VERWALTUNG VON NETZWERK-SLICE-RESSOURCEN
PROCÉDÉ ET APPAREIL DE GESTION DE RESSOURCES DE TRANCHES DE RÉSEAU

(43) Date of publication of application: 27.03.2019
(73) Proprietor: Huawei Technologies Co., Ltd., Longgang District Shenzhen, Guangdong 518129 (CN)
(72) Inventor: TANG, Pengcheng, Shenzhen Guangdong 518129 (CN); ZHOU, Wei, Shenzhen Guangdong 518129 (CN); ZHOU, Han, Shenzhen Guangdong 518129 (CN)
(74) Representative: Goddar, Heinz J.
(86) International application number: PCT/CN2016/086031
(87) International publication number: WO 2017/214932

(56) References cited:
- WO-A1-2016/048430
- WO-A1-2016/054922
- CN-A- 104 954 220
- CN-A- 105 429 780
- CN-A- 105 468 435
- CN-A- 105 468 435
- US-A1- 2011 125 905
- Peter Rost ET AL: "Project: H2020-ICT-2014-2 5G NORMA Project Name: 5G Novel Radio Multiservice adaptive network Architecture (5G NORMA) Functional Network Architecture and Security Requirements", , 31 December 2015 (2015-12-31), XP055546602, Retrieved from the Internet: URL:http://www.it.uc3m.es/wnl/5gnorma/pdf/ 5g_norma_d3-1.pdf [retrieved on 2019-01-23]
- HUAWEI TECHNOLOGIES (UK) ET AL: "Missed consistency clarifications for B.5 and C.5;NFVMAN(14)000365r3_Missed_consistency_ clarifications_for_B_5_and_C_5", ETSI DRAFT; NFVMAN(14)000365R3_MISSED_CONSISTENCY_CLAR IFICATIONS_FOR_B_5_AND_C_5, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - NFV, 1 August 2014 (2014-08-01) , pages 1-45, XP014228848, [retrieved on 2014-08-01]

## Description

### TECHNICAL FIELD

The present invention relates to the communications field, and in particular, to a method and an apparatus for managing resources of a network slice (slice).

### BACKGROUND

Network functions virtualization (Network Function Virtualization, NFV for short) is one of key technologies in a fifth-generation mobile communication technology (5-Generation, 5G for short) network. In the European Telecommunications Standards Institute (European Telecommunications Standards Institute, ETSI for short) NFV standard, a series of life cycle management procedures for managing a network service (Network Service, NS for short) and a virtual network function (Virtual Network Function, VNF for short) are defined, including launch of an NS template, NS instantiation, NS elastic scaling, update, and instance termination. The NS may also be referred to as a network slice, and the network slice may be understood as an abstract network logic function.

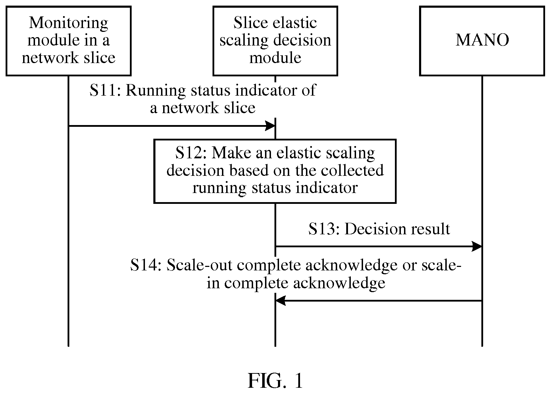

The following describes an elastic scaling mechanism of the network slice. Each network slice may determine, by using a procedure shown in FIG. 1, whether to perform scale-out or scale-in.

S11: A monitoring module in a network slice periodically collects a running status indicator of the network slice. For example, the running status indicator includes a resource indicator and a service indicator. The monitoring module reports the collected running status indicator to a slice elastic scaling decision module.

S12: The slice elastic scaling decision module makes an elastic scaling decision based on the collected running status indicator. A decision result may be keeping a current quantity of instances of the NS unchanged, creating a specific quantity of NS instances, or terminating a specific quantity of NS instances.

S13: The slice elastic scaling decision module sends the decision result to a management and orchestration (Management and Orchestration, MANO for short) module in an ETSI NFV architecture, and the MANO module performs a corresponding scale-out or scale-in procedure.

S14: After completing the scale-out or scale-in procedure, the MANO module replies the slice elastic scaling decision module with an acknowledgement message.

Based on the foregoing procedure, the MANO module may cooperate with the slice elastic scaling decision module to complete a series of actions of scale-out and scale-in. A main objective of performing scale-out is to satisfy a resource demand of the network slice, and to supplement a specific quantity of instances in time. An objective of performing scale-in is to recycle resources in time when the network service is idle, to avoid a resource waste and reduce costs of a slice tenant.

However, resource utilization of an infrastructure is still relatively low in an existing elastic scaling mechanism of a network slice.

WO 2016/054922 A1 discloses a decision coordination method and device, the method comprising: receiving a decision coordination request message from an implementation component in a network functions virtualization (NFV) system, and the decision coordination request message comprising a to-be-coordinated decision; determining a coordinated decision according to the to-be-coordinated decision; sending a decision coordination response message to the implementation component, and the decision coordination response message comprising the coordinated decision and being used for instructing the implementation component to implement the coordinated decision. An example introduces a decision coordinator, and the implementation component determines the coordinated decision from the to-be-coordinated decisions via the decision coordinator, such that only the coordinated decision needs to be implemented; compared with the prior art, the presented example is more flexible.

Peter Rost ET AL: "Project: H2020-ICT-2014-2 5G NORMA Project Name: 5G Novel Radio Multiservice adaptive network Architecture (5G NORMA) Functional Network Architecture and Security Requirements", 31 December 2015, Retrieved from the Internet: URL:http://www.it.uc3m.es/wnl/5gnorma/pdf/5g_norma_d3-1.pdf [retrieved on 2019-01-23] discloses a comprehensive list of quantitative and qualitative requirements for the 5G NORMA architecture, including security and functional requirements. Based on these requirements, key technology enablers are described which are necessary for a 5G architecture. In order to integrate these technologies, the preliminary 5G NORMA reference architecture is introduced. It is detailed through four distinct views which relate the two main functional requirements, i.e. mobile network multi-tenancy, and multi-service and context-aware adaptation and allocation of mobile network functions, with the key technology enablers Software-defined mobile network control, adaptive composition and allocation of network functions, and joint optimization of mobile access and core. Using these four different views, the architecture is discussed and its requirements are further detailed. Finally, a detailed description of the validation process of the 5G NORMA architecture design is provided.

CN 105 468 435 A discloses an NFV dynamic resource distribution method. The method comprises the steps that a virtual machine periodically reports a resource occupation condition and a VNF (Virtualized Network Function) or VNFC (Virtualized Network Function Infrastructure) running in the virtual machine to MANO (Management and Orchestration); the MANO collects the resource occupation condition of each virtual machine and priority information of the VNF or VNFC running in the virtual machine, and performs updating and recording; and the MANO performs inter-virtual machine virtual resource optimization or cross-virtual network or cross-physical network virtual resource optimization according to record information, wherein different processing is carried out according to the state of each virtual machine and the priority of the VNF or VNFC running in the virtual machine during the virtual resource optimization, and the cross-virtual network or cross-physical network virtual resource optimization can be carried out when no available resources are in a same virtual network. With the adoption of the NFV dynamic resource distribution method, the occupation condition of virtual resources in each virtual machine is automatically detected, so that the resource occupation and service performance of a high-priority service can be ensured preferentially; idle virtual resources in the virtual machine are released, so that more services can be extended; and therefore, the method has a wider application range.

HUAWEI TECHNOLOGIES (UK) ET AL: "Missed consistency clarifications for B.5 and C. 5;NFVMAN(14)000365r3_Missed_consistency_clarifications_for_B_5_and_C_5", ETSI DRAFT; NFVMAN(14)000365R3_MISSED_CONSISTENCY_CLARIFICATIONS_FOR_B_5_AND_C_5, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - NFV, 1 August 2014, pages 1-45, [retrieved on 2014-08-01] discloses a collection (non-exhaustive) of management flows related to VNF Lifecycle that should be possible to implement by means of the interfaces described in the main part of the document. Furthermore, a collection (non-exhaustive) of management flows related to the Network Service Lifecycle are presented.

US 2011/125905 A1 discloses a system operator may connect to an infrastructure resource and request a slice of spectrum resources with desired properties and a desired capacity. A slice manager of the infrastructure resource checks whether the request can be fulfilled from the available free capacity and optionally considers additional policies. If the outcome is positive, the slice manager offers a slice with a specific capacity, which may or may not be identical to the system operator' s requested capacity. The offer may contain other information such as cost and billing details. In case the offer is acceptable to the system operator, he sends an accept message to the slice, manager. Optionally, there may be additional negotiation steps.

### SUMMARY

This application provides a method and an apparatus for managing resources of a network slice, to optimize resource utilization of an infrastructure.

The invention is defined by the appended independent claims and further embodiments are described by the dependent claims. Any reference to inventions or embodiments not falling within the scope the independent claims are to be interpreted as examples useful for understanding the invention.

A first aspect of this application provides a method for managing resources of a network slice, including:
obtaining, by a slice management module, independent decision results of a plurality of network slices, where the independent decision result includes scale-out, scale-in, or keeping a quantity of instances unchanged;
if the independent decision results of the plurality of network slices are not completely consistent, determining, by the slice management module, final decision results for the network slices based on the independent decision results of the plurality of network slices; and
sending, by the slice management module, the final decision results to a VIM, where the final decision results are used to instruct to allocate resource of a first network slice in the plurality of network slices to a second network slice in the plurality of network slices, and
an independent decision result of the first network slice is scale-in, and an independent decision result of the second network slice is keeping a quantity of instances unchanged or scale-out; or an independent decision result of the first network slice is keeping a quantity of instances unchanged, and an independent decision result of the second network slice is scale-out,
   wherein before the obtaining, by a slice management module, independent decision results of a plurality of network slices respectively, the method further comprises:
   receiving, by the slice management module, a request for instructing to create a network slice template, wherein the network slice template comprises a resource orchestration ratio parameter, and the resource orchestration ratio parameter is a maximum resource ratio of network slice instances allowed to be shared;
   creating, by the slice management module, the network slice template based on the request; and
   creating, by the slice management module based on the network slice template, network slice instances comprised in the first network slice.

In the solution in this application, resources are allocated more properly by using a feature that peaks and valleys of load of network slices overlap, so that resources can be coordinated from another network slice whose independent decision result is scale-in or is keeping a quantity of instances unchanged to a network slice whose independent decision result is scale-out, or resources can be coordinated from another network slice whose independent decision result is scale-in to a network slice whose independent decision result is keeping a quantity of instances unchanged, and therefore a network slice whose capacity needs to be increased does not need to request for new resources from the infrastructure, thereby improving resource utilization of the infrastructure and reducing resource procurement costs of a slice tenant. In this solution, the process of adding the attribute of the resource orchestration ratio parameter to the network slice template is described, and the process of creating the network slice instance by using the network slice template carrying the resource orchestration ratio parameter is described, thereby resolving a problem of configuring the slice resource orchestration ratio parameter.

In a possible design, before the determining, by the slice management module, final decision results for the network slices based on the independent decision results of the plurality of network slices, the method further includes:
obtaining, by the slice management module, a total quantity of resources occupied by the first network slice and a resource orchestration ratio parameter value of the first network slice, so that a quantity of the resources allocated from the first network slice to the second network slice is not greater than a product of the total quantity of resources occupied by the first network slice and the resource orchestration ratio parameter value of the first network slice, where
the resource orchestration ratio parameter value of the first network slice is a minimum value of resource orchestration ratio parameter values of all the network slice instances included in the first network slice.

In this implementation, the resources of the network slice can be prevented from being deprived without limits, making resource allocation between the network slices more proper.

In a possible design, before the determining, by the slice management module, final decision results for the network slices based on the independent decision results of the plurality of network slices, the method further includes:
obtaining, by the slice management module, a service level agreement SLA indicator of the first network slice;
obtaining, by the slice management module, a predicted service indicator of the first network slice after the resources of the first network slice are allocated to the second network slice; and
determining, by the slice management module, that the predicted service indicator of the first network slice is not contrary to the SLA indicator of the first network slice.

In this implementation, it can be ensured that the network slice complies with the SLA, thereby better providing a network service for a user.

In a possible design, the determining, by the slice management module, final decision results for the network slices based on the independent decision results of the plurality of network slices includes:
obtaining, by the slice management module, a predicted independent decision result of the first network slice; and
if the predicted independent decision result of the first network slice is not scale-out, determining, by the slice management module, to allocate the resources of the first network slice to the second network slice; or if the predicted independent decision result of the first network slice is scale-out, determining, by the slice management module, not to allocate the resources of the first network slice to the second network slice.

In this implementation, the network slice can better comply with the SLA, and unnecessary resource allocation actions can be reduced, to avoid an action of frequently performing scale-in or scale-out on a network slice.

In a possible design, the slice management module may be deployed in a VNFM; or the slice management module may be deployed in an NFVO; or the slice management module may be deployed in an OSS/BSS.

In a possible design, the obtaining, by a slice management module, independent decision results of a plurality of network slices includes:
receiving, by the slice management module, the independent decision result sent by each of the plurality of network slices; or receiving, by the slice management module, a service indicator and a resource indicator sent by each of the plurality of network slices, and determining the independent decision result of each network slice based on the service indicator and the resource indicator of each network slice.

In a possible design, if the slice management module is deployed in the VNFM, the slice management module sends the final decision results to the VIM through an interface between the VNFM and the VIM; or the slice management module sends the final decision results to the NFVO through an interface between the VNFM and the NFVO, and then the NFVO forwards the final decision results to the VIM through an interface between the NFVO and the VIM; or the slice management module sends the final decision results to the OSS/BSS, and the OSS/BSS sends the final decision results to the NFVO through an interface between the OSS/BSS and the NFVO, and then the NFVO sends the final decision results to the VIM through an interface between the NFVO and the VIM;
if the slice management module is deployed in the NFVO, the slice management module sends the final decision results to the VIM through an interface between the NFVO and the VIM; or the slice management module sends the final decision results to the VNFM through an interface between the NFVO and the VNFM, and then the VNFM sends the final decision results to the VIM through an interface between the VNFM and the VIM; or
if the slice management module is deployed in the OSS/BSS, the slice management module sends the final decision results to the NFVO through an interface between the OSS/BSS and the NFVO, and then the NFVO forwards the final decision results to the VIM through an interface between the NFVO and the VIM.

A second aspect of this application provides an apparatus for managing resources of a network slice. The apparatus has a function of implementing the behaviors of the slice management module in the foregoing method embodiment. The function may be implemented by hardware, or may be implemented by hardware executing corresponding software. The hardware or software includes one or more modules or units that correspond to the foregoing function.

In a possible design, a structure of the apparatus includes an obtaining unit, a determining unit, and a sending unit, and the units can perform the corresponding functions in the foregoing method example. For details, refer to the detailed descriptions in the method example. This is not described herein again.

In a possible design, a structure of the apparatus includes a network interface, a processor, a bus, and a memory. The network interface is configured to perform communication and interaction with another device in the communications system. The processor is configured to support the apparatus in performing the corresponding functions in the foregoing method. The memory is coupled to the processor, and the memory stores a program instruction and data that are necessary for the apparatus.

### BRIEF DESCRIPTION OF DRAWINGS

FIG. 1 is a flowchart of an elastic scaling mechanism of a network slice in the prior art;
FIG. 2 is a schematic diagram of a network slice deployment architecture in the prior art;
FIG. 3 are curved schematic diagrams of making elastic scaling decisions on two network slices based on load changes in the prior art;
FIG. 4 is a schematic diagram of an NFV system applied in a method for managing resources of a network slice according to an embodiment of this application;
FIG. 5 is a schematic diagram of information exchange between a network slice and a slice management module according to an embodiment of this application;
FIG. 6 is a flowchart of a method for managing resources of a network slice according to an embodiment of this application;
FIG. 7 is a flowchart of operations of adding, modifying, and querying a resource orchestration ratio parameter according to an embodiment of this application;
FIG. 8 is a flowchart of an operation of updating a resource orchestration ratio parameter in a network slice instance according to an embodiment of this application;
FIG. 9 is a schematic diagram of an approach for sending a final decision result according to an embodiment of this application;
FIG. 10 is a schematic diagram of another approach for sending a final decision result according to an embodiment of this application;
FIG. 11 is a schematic diagram of still another approach for sending a final decision result according to an embodiment of this application;
FIG. 12 is a schematic diagram of a method for allocating resources between three network slices according to an embodiment of this application;
FIG. 13 is a schematic structural diagram of an apparatus for managing resources of a network slice according to an embodiment of this application; and
FIG. 14 is a schematic structural diagram of another apparatus for managing resources of a network slice according to an embodiment of this application.

### DESCRIPTION OF EMBODIMENTS

The following explains some terms in this application.

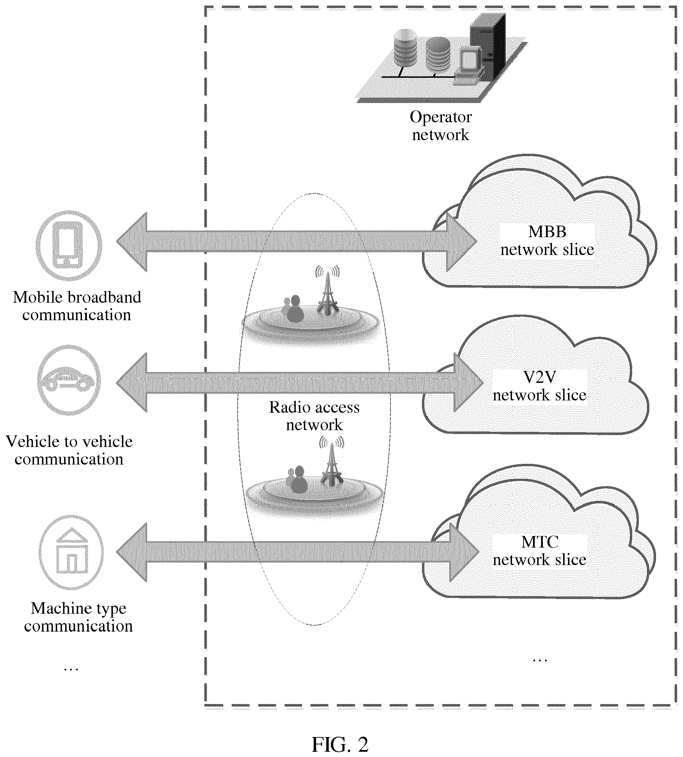

A "network slice", also referred to as an NS, is defined in the 3rd Generation Partnership Project (3rd Generation Partnership Project, 3GPP for short) standard as including a group of logical network functions that support a specific communication services. To avoid mutual impact between a plurality of network slices and satisfy requirements on service diversity and network slice isolation, an operator can provide customized network slices for different types of communication on a same infrastructure. As shown in FIG. 2, the operator provides an MBB network slice for mobile broadband (Mobile Broad Band, MBB for short) communication, provides a V2V slice for vehicle to vehicle (Vehicle to Vehicle, V2V for short) communication, and provides an MTC network slice for machine type communication (Machine Type Communication, MTC for short).

A "network slice instance" is generated by using a network slice template. A process of creating a network slice instance by using a network slice template is referred to as instantiation. For example, the network slice instance may be implemented by using software. A network slice may include a plurality of network slice instances, and network slice templates used by the plurality of network slice instances may be the same or may be different. In this application, "quantity of instances" is used to indicate a quantity of network slice instances included in a network slice.

"Resource allocation" refers to that resources, for example, a virtual machine (VM for short), a central processing unit (Central Processing Unit, CPU for short), a memory, and a disk storage, occupied by a network slice are allocated to another network slice for use, so that a process of applying for new resources by the another network slice from idle resources may be omitted. For example, the resource allocation may be implemented by deleting some network slice instances of a network slice and allocating resources occupied by the deleted network slice instances to another network slice. Alternatively, the resource allocation may be implemented by modifying a homing relationship of a network slice instance. Alternatively, the resource allocation may further be implemented by allocating only some resources occupied by a network slice instance to another network slice on a premise that the network slice instance is not deleted.

An "independent decision result" is an elastic scaling decision result obtained based on a resource indicator and a service indicator of a network slice. An independent decision result of each network slice is related to only a status of the network slice, for example, related to a resource indicator and a service indicator of the network slice.

A "final decision result", also referred to as an orchestration decision result, is an elastic scaling decision result obtained in combination with independent decision results of a plurality of network slices. A final decision result of each network slice is not only related to an independent decision result of the network slice, but also related to an independent decision result of another network slice.

A "resource indicator" may include one or more of the following: an indicator of a quantity of instances included in a network slice, an indicator of a quantity of VMs, a CPU indicator of each VM, a memory indicator, or another indicator such as a bandwidth utilization indicator.

A "service indicator" depends on a service provided by an NS. For an evolved packet core (Evolved Packet Core, EPC for short) control plane network service, the service indicator may include an average signaling processing latency, a quantity of attached users, a quantity of activated bearers, and the like. For an EPC forwarding plane network service, the service indicator may include a packet forwarding bandwidth, a packet processing latency, and the like.

A "service level agreement (Service Level Agreement, SLA for short)" is a protocol describing a promise of an operator or a content provider about aspects of a service such as runtime, running quality, and linkage. For example, when a user purchases a service of the operator, the operator and the user subscribe an SLA. For example, the SLA is that a network bandwidth provided by the operator to the user cannot be less than 50 megabytes (unit: M), and if the bandwidth provided by the operator is less than 50 M, the operator is contrary to the SLA and needs to compensate the user.

In addition, it should be understood that in the description of this application, the words "first", "second", and the like are merely used for description, and shall not be understood as an indication or implication of relative importance. Moreover, unless otherwise specified, "a plurality of" means two or more than two.

The following describes the technical solutions of the present invention with reference to the accompanying drawings and embodiments.

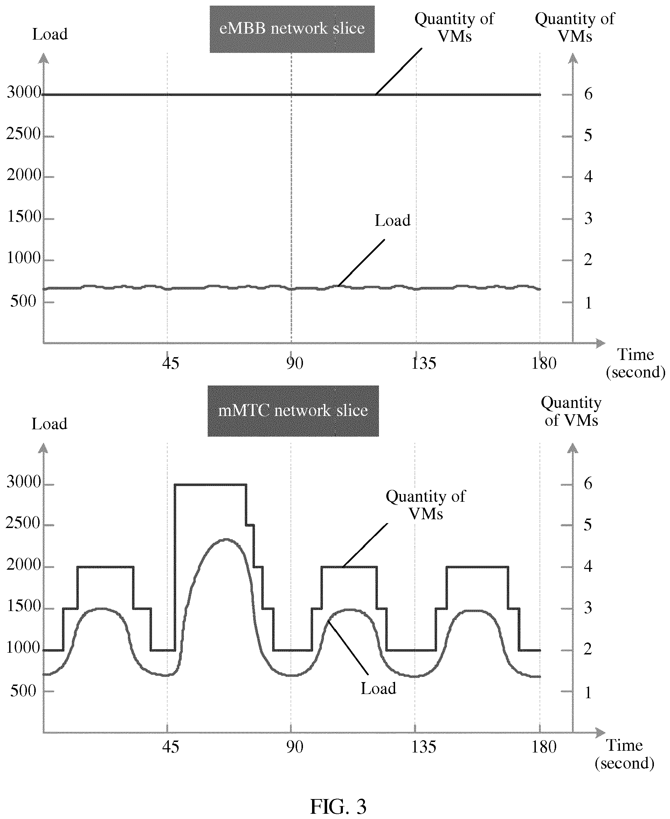

In a current elastic scaling mechanism, each network slice independently determines, based on load of the network slice, whether to perform scale-out or scale-in. FIG. 3 are schematic curved charts of making elastic scaling decisions on two network slices respectively based on load changes of the two network slices. Generally, different network slices have different load change trends. Moreover, as time elapses, load of a network slice also changes. In FIG. 3, load of an enhanced mobile broadband (enhanced MBB, eMBB for short) network slice is always at a relatively low level, but still does not satisfy a scale-in condition, and therefore a quantity of VMs occupied by the eMBB network slice always remains unchanged. Load of a massive machine type communication (massive MTC, mMTC for short) network slice presents a high/low change trend, and a MANO module cooperates, based on the load change of the mMTC network slice, with the mMTC network slice in completing a series of actions of scale-out and scale-in.

However, in such an elastic scaling mechanism, when making an elastic scaling decision, each network slice considers a load change of only the network slice, instead of considering a load change of other slices deployed on a same infrastructure. Therefore, a used elastic scaling policy is only a local optimal solution rather than a global optimal solution of the entire infrastructure, leading to relatively low resource utilization of the infrastructure.

In view of this, this application provides a method and an apparatus for managing resources of a network slice, to allocate resources more properly by using a feature that peaks and valleys of load of network slices overlap, so that resources can be coordinated from another network slice whose independent decision result is scale-in or is keeping a quantity of instances unchanged to a network slice whose independent decision result is scale-out, or resources can be coordinated from another network slice whose independent decision result is scale-in to a network slice whose independent decision result is keeping a quantity of instances unchanged, and therefore a network slice whose capacity needs to be increased does not need to request for new resources from the infrastructure, thereby improving resource utilization of the infrastructure and reducing resource procurement costs of a slice tenant.

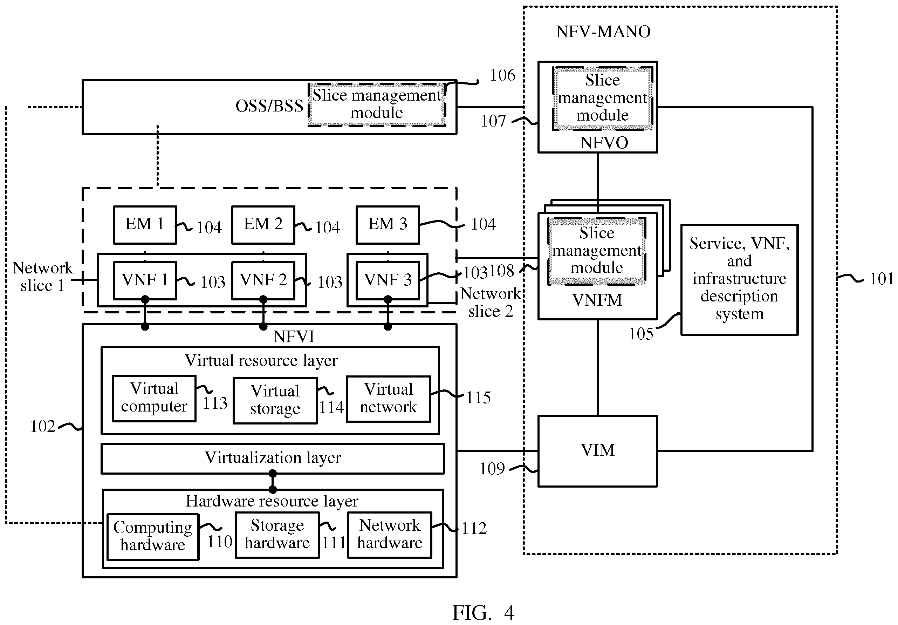

The method for managing resources of a network slice provided in this application may be applied to an NFV system shown in FIG. 4. The NFV system may be implemented by using a plurality of networks, for example, a data center network, a service provider network, or a local area network (Local Area Network, LAN for short).

As shown in FIG. 4, the NFV system may include an NFV-MANO 101, an NFV infrastructure (NFV Infrastructure, NFVI for short) 102, a plurality of VNFs 103, a plurality of element managers (element management, EM for short) 104, and one or more operation support systems or business support systems (Operation Support System/Business Support System, OSS/BSS for short) 106.

The NFV-MANO 101 may include a service, VNF, and infrastructure description (Service, VNF, and Infrastructure Description) system 105, a network functions virtualization orchestrator (Network Functions Virtualization Orchestrator, NFVO for short) 107, one or more virtualized network function managers (Virtualized Network Function Manager, VNFM for short) 108, and one or more virtualized infrastructure managers (Virtualized Infrastructure Manager, VIM for short) 109. The NFVI 102 may include a hardware resource layer including computing hardware 110, storage hardware 111, and network hardware 112, a virtualization layer, and a virtual resource layer including a virtual computer 113 (for example, a virtual machine), a virtual storage 114, and a virtual network 115.

The computing hardware 110 at the hardware resource layer may be a dedicated processor or a general-purpose processor configured to provide a processing and computing function. The storage hardware 111 is configured to provide a storage capability. The storage capability may be provided by the storage hardware 111 (for example, a local memory of a server), or may be provided by using a network (for example, a server is connected to a network storage device by using the network). The network hardware 112 may be a switch, a router, and/or another network device. The network hardware 112 is configured to implement communication between multiple devices. The multiple devices are connected in a wireless or wired manner.

The virtualization layer in the NFVI 102 is used to: abstract a hardware resource at the hardware resource layer, decouple the VNF 103 from a physical layer to which the hardware resource belongs, and provide a virtual resource to the VNF 103.

The virtual resource layer may include the virtual computer 113, the virtual storage 114, and the virtual network 115. The virtual computer 113 and the virtual storage 114 may be provided to the VNF 103 in a form of a virtual machine or another virtual container. For example, the one or more VNFs 103 may be deployed on a virtual machine. The network hardware 112 is abstracted by the virtualization layer to form the virtual network 115. The virtual network 115 is, for example, a virtual switch (Vswitches), configured to implement communication between a plurality of virtual machines or a plurality of virtual containers that are of other types and that carry VNFs. Virtualization of the network hardware may be implemented by using technologies such as a virtual LAN (Virtual LAN, VLAN for short), a virtual private LAN service (Virtual Private LAN Service, VPLS for short), a virtual extensible local area network (Virtual eXtensible Local Area Network, VxLAN for short), or network virtualization using Generic Routing Encapsulation (Network Virtualization using Generic Routing Encapsulation, NVGRE for short).

The OSS/BSS 106 mainly serves a telecommunications service operator, provides an integrated network management and service operation function, including network management (for example, fault monitoring and network information collection), accounting management, customer service management, and the like. The service, VNF, and infrastructure description system 105 is described in detail in the ETSI GS NFV 002 v1.1.1 standard, and is not described in detail in this embodiment of this application again.

The NFV-MANO 101 may be configured to implement monitoring and management of the VNF 103 and the NFVI 102. The NFVO 107 may communicate with the one or more VNFMs 108 to implement a resource-related request, send configuration information to the VNFMs 108, and collect status information of the VNF 103. In addition, the NFVO 107 may further communicate with the VIM 109 to implement resource allocation and/or implement reservation and exchange of configuration information and the status information of virtualized hardware resources. The NFVO 107 may instruct the VNFM 108 to communicate with the VNF 103 and the EM 104 to perform life cycle management on the VNF 103 and implement exchange of the configuration/status information, that is, to be responsible for creation, deletion, start, termination, and the like of the VNF 103. The VIM 109 may be configured to control and manage interaction between the VNF 103 and the computing hardware 110, the storage hardware 111, the network hardware 112, the virtual computer 113, the virtual storage 114, and the virtual network 115. For example, the VIM 109 may be configured to perform an operation of allocating resources to the VNF 103. The VNFM 108 and the VIM 109 may communicate with each other to exchange the configuration information and the status information of the virtualized hardware resource.

The NFVI 102 includes hardware and software that jointly create a virtualized environment to deploy, manage, and perform the VNF 103. In other words, the hardware resource layer and the virtual resource layer are configured to provide virtual resources to each VNF 103, for example, a virtual machine and/or a virtual container in another form.

The VNF 103 is virtualization of at least one network function, and the network function is previously provided by a physical network device. In an implementation, the VNF 103 may be a virtualized mobility management entity (Mobility Management Entity, MME for short) node, configured to provide all network functions provided by a typical non-virtualized MME device. In another implementation, the VNF 103 may be configured to implement functions of some of all components provided by the non-virtualized MME device. One VNF 103 may include a plurality of VMs. The EM 104 may be configured to manage the one or more VNFs 103.

The method for managing resources of a network slice provided in this application mainly relates to two network elements: a network slice and a slice management module. The slice management module is configured to coordinate resources between a plurality of network slices based on independent decision results of the plurality of network slices.

The network slice may include one or more VNFs 103. For example, in FIG. 4, a network slice 1 includes a VNF 1 and a VNF 2, and a network slice 2 includes a VNF 3. The independent decision result of each network slice may be determined by the VNF 103 included in the network slice, or may be determined by the EM 104 connected to the VNF 103 included in the network slice, or may be determined by the VNFM 108, or may be determined by the slice management module.

The slice management module may be deployed in the VNFM 108, or may be deployed in the NFVO 107, or may be deployed in the OSS/BSS 106.

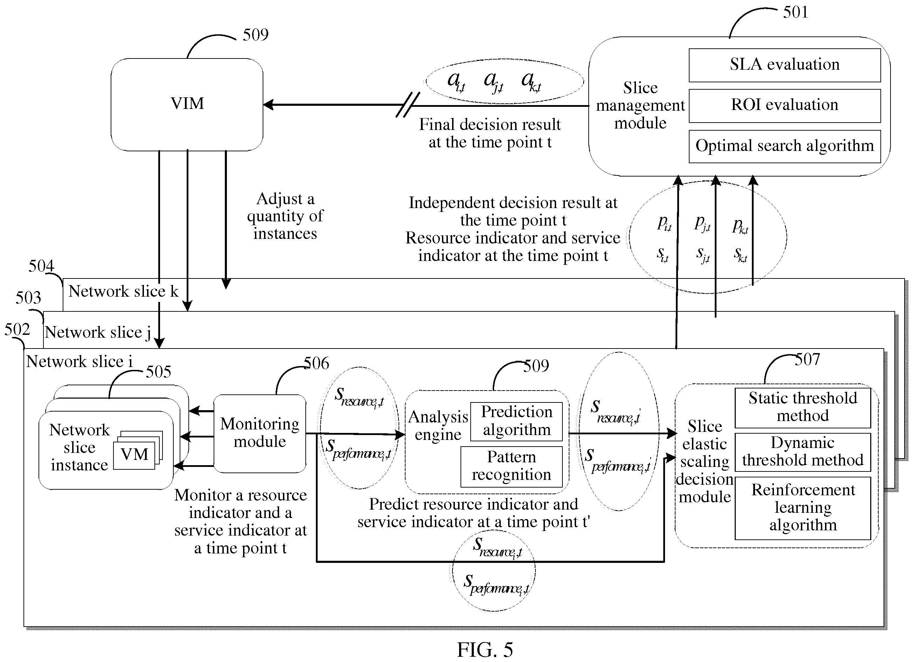

Regardless of a deployment manner in which the slice management module is deployed, information exchange between the network slice and the slice management module is shown in FIG. 5. There is a slice management module 501 and a plurality of network slices in FIG. 5, for example, a network slice i 502, a network slice j 503, and a network slice k 504. Each network slice may include at least one network slice instance 505 and at least one monitoring module 506.

The monitoring module 506 in each network slice is configured to periodically collect a resource indicator and a service indicator of the network slice instance 505 included in the network slice. In FIG. 5, *s*_{*resourceᵢ*,}*ₜ* represents a resource indicator at a time point t that is of the network slice instance 505 included in the network slice i 502 and that is collected by the monitoring module 506 in the network slice i 502, and *s*_{*performanceᵢ*,*t*} represents a service indicator at the time point t that is of the network slice instance 505 included in the network slice i 502 and that is collected by the monitoring module 506 in the network slice i 502.

Optionally, each network slice may further include a slice elastic scaling decision module 507.

When the network slice includes the slice elastic scaling decision module 507, the monitoring module 506 may report the collected resource indicator and service indicator to the slice elastic scaling decision module 507 in the network slice.

The slice elastic scaling decision module 507 in each network slice is configured to obtain, based on the resource indicator and the service indicator of the network slice, the independent decision result corresponding to the network slice. The slice elastic scaling decision module 507 may make an elastic scaling decision based on different policies. The policies may be a static threshold (Static Threshold) algorithm, a dynamic threshold (Dynamic Threshold) algorithm, or a reinforcement learning (Reinforcement Learning) algorithm, and another more advanced and more complex algorithm. A function of the slice elastic scaling decision module may be implemented by the EM 104 in FIG. 4, or may be implemented by the VNFM 108 in FIG. 4.

When the network slice does not include the slice elastic scaling decision module 507, the function of the slice elastic scaling decision module 507 may be implemented by the slice management module 501 in substitution. To be specific, the monitoring module 506 may report the resource indicator and the service indicator to the slice management module 501, and the slice management module 501 obtains, based on the resource indicator and the service indicator of the network slice, the independent decision result corresponding to the network slice.

The slice management module 501 is configured to obtain independent decision results respectively corresponding to a plurality of network slices, make a unified elastic scaling decision based on the independent decision results respectively corresponding to the plurality of network slices, and determine a final decision result for each of the plurality of network slices. For example, the obtaining independent decision results respectively corresponding to a plurality of network slices includes: directly obtaining the independent decision results respectively corresponding to the plurality of network slices, or obtaining resource indicators and service indicators of the plurality of network slices and obtaining, through analysis based on the two indicators, the independent decision results respectively corresponding to the plurality of network slices. As shown in FIG. 5, *s*_{*i*,*t*}, *s*_{*j*,*t*}, and *s*_{*k*,*t*} respectively represent resource indicators and service indicators of the network slice i 502, the network slice j 503, and the network slice k 504 at the time point t, *p*_{*i*,*t*}, *p*_{*j*,*t*}, and *p*_{*k*,*t*} respectively represent independent decision results of the network slice i 502, the network slice j 503, and the network slice k 504 at the time point t, and *a*_{*i*,*t*}, *a*_{*j*,*t*}, and *a*_{*k*,*t*} respectively represent final decision results of the network slice i 502, the network slice j 503, and the network slice k 504 at the time point t. The independent decision result and the final decision result of each network slice may be the same or may be different.

The slice management module 501 may make a unified elastic scaling decision based on different policies. The policies may be at least one of policies such as SLA evaluation (Evaluation), a return on investment ratio (return on investment, ROI for short), and an optimal search (Heuristically Search) algorithm. A unified elastic scaling decision made by the slice management module 501 based on the SLA evaluation is used as an example. Each network slice further needs to send an SLA indicator of the network slice to the slice management module 501.

In the prior art, each network slice cannot obtain SLA information, ROI information, and the like of another network slice, and therefore optimization that each network slice performs on the elastic scaling decision is only a local optimal elastic scaling policy, and global coordination cannot be implemented. In this embodiment of this application, the slice management module 501 may comprehensively consider SLA information, ROI information, and the like of each network slice, and find out, by using an optimal search algorithm, an elastic scaling policy that enables each network slice to reach global optimization.

After determining the final decision result for each network slice, the slice management module 501 sends the determined final decision result to the VIM 508, and the VIM 508 adjusts a quantity of instances of each network slice based on the final decision result.

Optionally, each network slice may further include an analysis engine 509.

The analysis engine 509 in each network slice is configured to obtain, from the monitoring module 506, a current resource indicator and a current service indicator of the network slice instance 505 included in the network slice, and predict, in combination with a historic resource indicator and a historic service indicator of the network slice, change trends of the resource indicator and the service indicator of the network slice. As shown in FIG. 5, *s*_{*resourceᵢ*,*t*}' represents a resource indicator that is of the network slice i 502 at a time point t' and that is predicted by the analysis engine 509 in the network slice i 502, and *s*_{*performanceᵢ*,*t*}' represents a service indicator that is of the network slice i 502 at time point t' and that is predicted by the analysis engine 509 in the network slice i 502. The analysis engine 509 may predict the change trends of the resource indicator and the service indicator by pattern recognition (Pattern Match) or by using a prediction (Prediction) algorithm.

When the network slice further includes the analysis engine 509, the slice elastic scaling decision module 507 or the slice management module 501 may further make an elastic scaling decision based on the resource indicator and the service indicator in combination with the predicted resource indicator and the predicted service indicator that are obtained by the analysis engine 509, to determine the independent decision result corresponding to the network slice, so that the obtained independent decision result can be more accurate. Similarly, the slice management module 501 may alternatively make a unified elastic scaling decision based on the independent decision result in combination with the predicted resource indicator and the predicted service indicator that are obtained by the analysis engine 509, to determine a final decision result for each of the plurality of network slices, so that the obtained final decision result can be more accurate.

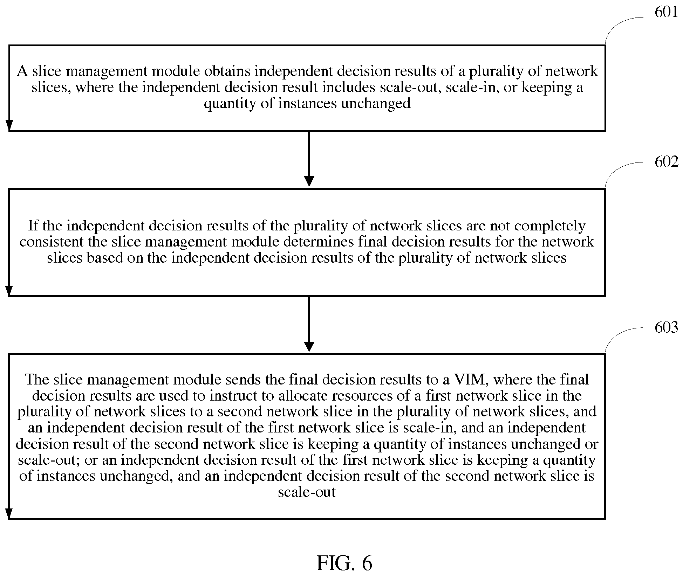

Based on the NFV system provided above, this embodiment of this application further provides a method for managing resources of a network slice, as shown in FIG. 6. In this embodiment of this application, steps in the method shown in FIG. 6 may be performed for a plurality of times, to dynamically adjust a quantity of instances of each network slice. For example, the method may include the following steps.

Step 601: A slice management module obtains independent decision results of a plurality of network slices, where the independent decision result includes scale-out, scale-in, or keeping a quantity of instances unchanged.

An objective of the scale-out is to supplement a specific quantity of network slice instances in time, to satisfy a resource demand of a network service. An objective of the scale-in is to recycle a specific quantity of network slice instances in time when the network service is idle, to avoid a waste of resources.

Optionally, the slice management module may obtain the independent decision results of the plurality of network slices in the following two manners.

First manner: A monitoring module in each of the plurality of network slices collects a service indicator and a resource indicator of the network slice, and sends the service indicator and the resource indicator to a slice elastic scaling decision module of the network slice. The slice elastic scaling decision module determines an independent decision result of the network slice based on the service indicator and the resource indicator of the network slice, and then each network slice sends the independent decision result of the network slice to the slice management module.

Second manner: A monitoring module in each of the plurality of network slices collects a service indicator and a resource indicator of the network slice, and then each network slice sends the service indicator and the resource indicator of each network slice to the slice management module, and the slice management module determines an independent decision result of each network slice based on the service indicator and the resource indicator of the network slice.

Step 602: If the independent decision results of the plurality of network slices are not completely consistent, the slice management module determines final decision results for the network slices based on the independent decision results of the plurality of network slices.

Step 603: The slice management module sends the final decision results to a VIM, where the final decision results are used to instruct to allocate resource of a first network slice in the plurality of network slices to a second network slice in the plurality of network slices, and an independent decision result of the first network slice is scale-in, and an independent decision result of the second network slice is keeping a quantity of instances unchanged or scale-out; or an independent decision result of the first network slice is keeping a quantity of instances unchanged, and an independent decision result of the second network slice is scale-out.

In a running environment of an existing network, peaks and valleys of load of the plurality of network slices may overlap, and this embodiment of this application exactly uses such type of overlapping relationship to allocate resources more properly, that is, to allocate resources of a lightly-loaded network slice to a heavily-loaded network slice, thereby improving resource utilization of an infrastructure. For example, it is assumed that a scale-in request is initiated when CPU utilization of a network slice is lower than 20%, when the network slice is in a normally-loaded state, for example, the CPU utilization is about 30%, although a threshold condition of triggering the scale-in is not satisfied, a waste of resources of the network slice is caused to some extent. By using this embodiment of this application, the wasted resources may be allocated to another network slice, so that utilization of the wasted resources can be improved, thereby further improving overall resource utilization of the infrastructure.

Optionally, to obtain a more accurate independent decision result, before the slice management module or the slice elastic scaling decision module in the network slice determines the independent decision result, an analysis engine in the network slice may predict, change trends of the resource indicator and the service indicator of the network slice by pattern recognition (Pattern Match) or by using a prediction (Prediction) algorithm and the like in combination with a current resource indicator and a current service indicator of the network slice and a historic resource indicator and a historic service indicator of the network slice, that is, may predict a predicted resource indicator and a predicted service indicator of the network slice in future. Then, the slice management module or the slice elastic scaling decision module in the network slice may determine the independent decision result of the network slice based on the current service indicator and the current resource indicator of the network slice in combination with the predicted service indicator and the predicted resource indicator of the network slice in future. In this way, scale-out may be performed on the network slice in advance before the load of the network slice changes sharply, to better comply with an SLA of the network slice.

The foregoing describes a method for allocating resources between network slices. To make resource allocation between the network slices more proper, this embodiment of this application further provides the following three resource allocation strategies. The three resource allocation strategies may be implemented alone or may be implemented jointly.

The first resource allocation strategy is as follows.

To prevent resources of a network slice from being deprived without limits, this embodiment of this application may add an attribute of a resource orchestration ratio parameter to the network slice, and allocates the resources based on the resource orchestration ratio parameter of the network slice. The resource orchestration ratio parameter is a maximum resource ratio of network slice instances allowed to be shared. For example, it is assumed that when a resource orchestration ratio parameter of a network slice instance is 30%, a quantity of VMs occupied by the network slice instance at a time point t1 is 10, and therefore a quantity of VMs that are of the network slice instance and that are allowed to be allocated at the time point t1 does not exceed 10×30%=3. It is assumed that three VMs of the network slice instance are allocated at the time point t1, during resource allocation next time, a quantity of VMs that are of the network slice instance and that are allowed to be allocated does not exceed └(10-3)×30%┘=2, or does not exceed ┌(10-3)×30%┐=3.

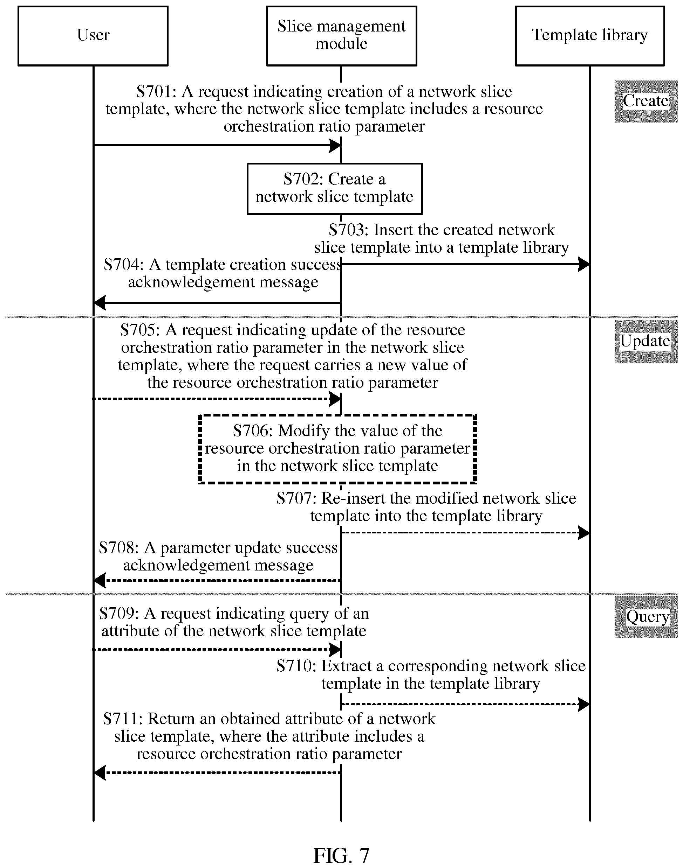

To add the resource orchestration ratio parameter to the network slice, an attribute of a network slice template used in instantiation of the network slice needs to be extended, that is, the resource orchestration ratio parameter is added based on an original network slice template parameter, and a default value that is set during initial creation of the resource orchestration ratio parameter is allowed to be viewed and modified after the template is created. To be specific, the slice management module needs to support operations related to the resource orchestration ratio parameter, such as adding, modification, and viewing. A procedure of the related operations is shown in FIG. 7. For a process of adding a resource orchestration ratio parameter to a network slice template, refer to step 701 to step 704.

Step 701: A slice management module receives a request that is from a user and that indicates creation of a network slice template, where the network slice template includes a resource orchestration ratio parameter.

Step 702: The slice management module creates the network slice template based on the request.

The resource orchestration ratio parameter included in the created network slice template is allowed to be viewed and modified.

To ensure security and correctness of the parameter, the slice management module may authenticate the user before creating the network slice template, and checks a value of the parameter carried in the request.

Step 703: The slice management module inserts the created network slice template into a template library.

Step 704: After completing the template creation procedure, the slice management module returns a template creation success acknowledgement message to the user.

For the process in which the user modifies the resource orchestration ratio parameter in the created network slice template, refer to step 705 to step 708.

Step 705: The slice management module receives a request that is from the user and that indicates update of the resource orchestration ratio parameter in the network slice template, where the request carries a new value of the resource orchestration ratio parameter.

Step 706: The slice management module modifies the value of the resource orchestration ratio parameter in the network slice template based on the request.

To ensure security and integrity of the parameter, the slice management module may authenticate the user before modifying the resource orchestration ratio parameter, and check a to-be-modified network slice template.

Step 707: After completing update of the network slice template, the slice management module re-inserts the modified network slice template into the template library.

Step 708: The slice management module returns a parameter update success acknowledgement message to the user.

For a process in which the user views an attribute of an existing network slice template, refer to step 709 to step 711.

Step 709: The slice management module receives a request that is from the user and that indicates query of an attribute of the network slice template, where a number of a to-be-viewed network slice template may be designated in the request, and if there is no specific network slice template designated in the request, it indicates queries of attributes of all network slice templates.

Step 710: The slice management module extracts a corresponding network slice template in the template library based on a designated slice template number, and if there is no designated network slice template number in the request, extracts all network slice templates.

For security, the slice management module may authenticate the user before extracting the network slice template.

Step 711: The slice management module returns an obtained attribute of a network slice template to the user, where the attribute includes a resource orchestration ratio parameter.

The foregoing process describes actions of adding, modifying, and querying an attribute, that is, a slice resource orchestration ratio parameter in the network slice template, thereby resolving a problem of configuring the resource orchestration ratio parameter. Use of the steps in this embodiment may flexibly modify a resource sharing ratio of the network slice, thereby providing support for resource orchestration between network slices.

After creating the network slice template carrying the resource orchestration ratio parameter, the slice management module may use the network slice template to create a network slice instance, for example, use the network slice template to create the network slice instance included in the first network slice in step 602, and a resource orchestration ratio parameter value of the created network slice instance included in the first network slice is allowed to be viewed and modified.

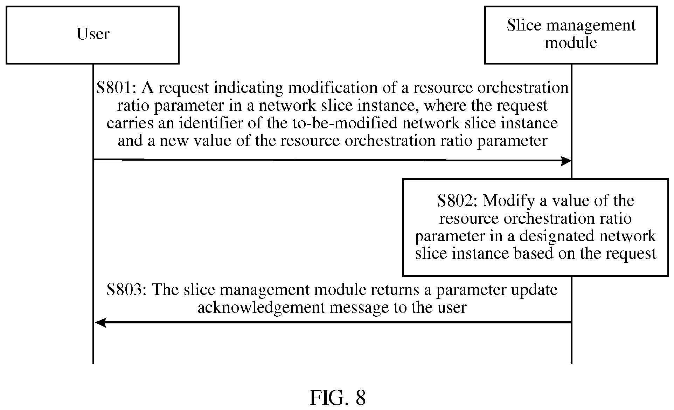

During actual application, a relatively large resource orchestration ratio parameter may be set for the network slice instance in consideration of costs, and a relatively small resource orchestration ratio parameter may be set for the network slice instance in consideration of performance. To optimize performance of the network service, the resource orchestration ratio parameter may need to be slightly adjusted during operation. A procedure of modifying the resource orchestration ratio parameter in the network slice instance is shown in FIG. 8 and includes the following steps.

Step 801: A slice management module receives a request that is from a user and that indicates modification of a resource orchestration ratio parameter in a network slice instance, where the request carries an identifier of the to-be-modified network slice instance and a new value of the resource orchestration ratio parameter.

Step 802: The slice management module modifies a value of the resource orchestration ratio parameter in a designated network slice instance based on the request.

For security, the slice management module may authenticate, before modifying the resource orchestration ratio parameter, the user sending the request message.

Step 803: The slice management module returns a parameter update acknowledgement message to the user.

This embodiment of this application provides a modification process of modifying a resource orchestration ratio parameter in an instantiated network slice, thereby resolving a problem of updating a parameter of a network slice instance that is instantiated by using a network slice template, so that a user can flexibly update a resource orchestration ratio of the network slice instance, to support more flexible orchestration policy configuration.

If resource orchestration ratio parameters of all network slice instances included in the first network slice in step 603 are the same, it can be considered that the resource orchestration ratio parameter value of the first network slice is a resource orchestration ratio parameter value of any network slice instance included in the first network slice. If the resource orchestration ratio parameters of the network slice instances included in the first network slice are not completely the same, it can be considered that the resource orchestration ratio parameter value of the first network slice is a minimum value of the resource orchestration ratio parameter values of all the network slice instances included in the first network slice. If a network slice includes two network slice instances, and resource orchestration ratio parameter values of the two network slice instances are respectively 10% and 20%, the smaller value of 10% may be used as the resource orchestration ratio parameter value of the network slice.

Correspondingly, before step 602, the slice management module may obtain a total quantity of resources occupied by the first network slice and a resource orchestration ratio parameter value of the first network slice, so that a quantity of the resources allocated from the first network slice to a second network slice is not greater than a product of the total quantity of resources occupied by the first network slice and the resource orchestration ratio parameter value of the first network slice. The resource orchestration ratio parameter value of the first network slice is a minimum value of resource orchestration ratio parameter values of all the network slice instances included in the first network slice.

In another embodiment of this application, if the resource orchestration ratio parameters of the network slice instances included in the first network slice are not completely the same, the slice management module may further obtain a total quantity of resources occupied by each network slice instance included in the first network slice and a resource orchestration ratio parameter value of each network slice instance, so that a quantity of the resources allocated from the first network slice to the second network slice is not greater than a product of the total quantity of resources occupied by the network slice instance and the resource orchestration ratio parameter value of the network slice instance. For example, a network slice includes a network slice instance A and a network slice instance B, resource orchestration ratio parameter values of the network slice instance A and the network slice instance B are respectively 10% and 20%, and quantities of VMs occupied by the network slice instance A and the network slice instance B are respectively 10 and 20, a quantity of VMs allocated from the network slice instance A cannot exceed one (10^{∗}10%), and a quantity of VMs allocated from the network slice instance B cannot exceed four (20^{∗}20%).

The second resource allocation strategy is as follows.

To enable the network slice to provide a better network service to the user, the slice management module may perform resource allocation based on an SLA indicator of the network slice. A specific implementation is as follows.

Before step 602, the slice management module obtains an SLA indicator of the first network slice, and obtains a predicted service indicator of the first network slice after the resources of the first network slice are allocated to the second network slice. If the predicted service indicator of the first network slice is not contrary to the SLA indicator of the first network slice, the slice management module determines to allocate the resources of the first network slice to the second network slice. If the predicted service indicator of the first network slice is contrary to the SLA indicator of the first network slice, the slice management module determines not to allocate the resources of the first network slice to the second network slice.

For example, a maximum latency of the agreement is defined in the SLA. If the slice management module predicts that after some resources of a network slice are allocated to another network slice, a latency of the network slice at a specific time point in future exceeds the maximum latency defined in SLA, a service indicator predicted in this case is contrary to the SLA indicator of the first network slice, and the slice management module can determine not to allocate the resources from the network slice.

The third resource allocation strategy is as follows.

The slice management module may perform the steps in the method shown in FIG. 6 for a plurality of times, to enable the network slice to better comply with the SLA, and reduce unnecessary resource allocation actions to avoid an action of frequently performing scale-in or scale-out on a network slice. For example, resources of a network slice are allocated to another network slice in a specific time period, and resources of another network slice are allocated to the network slice in a next neighboring time period, the slice management module may perform resource allocation based on a predicted independent decision result of the network slice.

The predicted independent decision result is an independent decision result that is obtained based on a predicted resource indicator and a predicted service indicator of the network slice and that may be used by the network slice in a next time period.

A specific implementation is as follows.

Before step 602, the slice management module obtains a predicted independent decision result of the first network slice. If the predicted independent decision result of the first network slice is not scale-out, the slice management module determines to allocate the resources of the first network slice to the second network slice. If the predicted independent decision result of the first network slice is scale-out, the slice management module determines not to allocate the resources of the first network slice to the second network slice.

After step 602, the slice management module may return the final decision results respectively corresponding to the plurality of network slices to the network slices. The returned message may include a flag used to indicate the final decision result. For example, 0 is used to indicate that a current quantity of instances is kept unchanged, 1 is used to indicate that the network slice needs to be passively scaled in, and 2 is used to indicate that the network slice needs to be passively scaled out. If the final decision result is scale-out or scale-in, the returned message further needs to carry a quantity of instances that are scaled out and a quantity of instances that are scaled in.

In step 603, the slice management module further needs to send the final decision results to the VIM, and the VIM executes the final decision results.

Because the slice management module may be deployed in a VNFM, an NFVO, or an OSS/BSS, the final decision results may be sent by the slice management module to the VIM based on the different deployment manners of the slice management module in the following approaches.

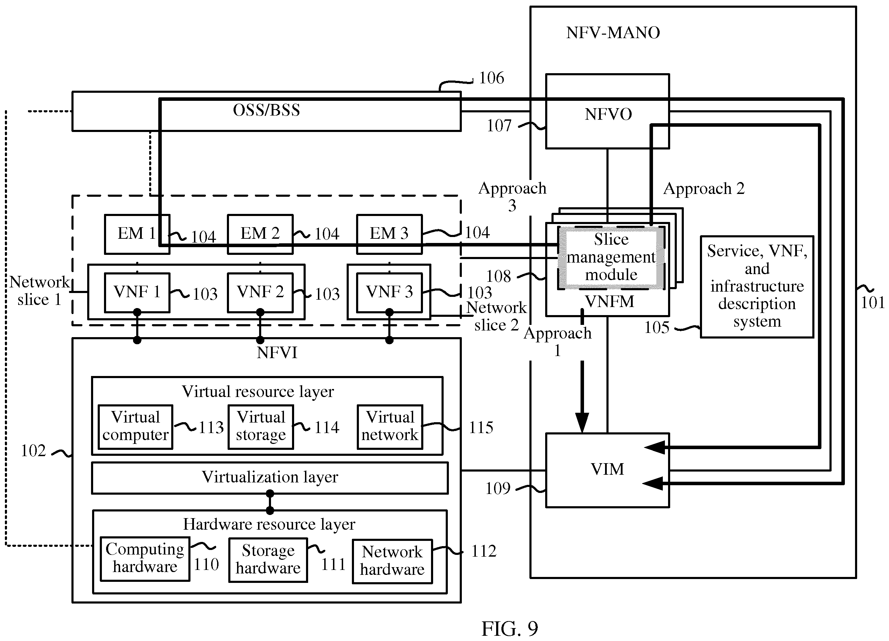

If the slice management module is deployed in the VNFM, the slice management module may send the final decision results to the VIM through an interface between the VNFM and the VIM, for example, an approach 1 in FIG. 9; or the slice management module may send the final decision results to the NFVO through an interface between the VNFM and the NFVO, and the NFVO forwards the final decision results to the VIM through an interface between the NFVO and the VIM, for example, an approach 2 in FIG. 9; or the slice management module may send the final decision results to the OSS/BSS, and the OSS/BSS sends the final decision results to the NFVO through an interface between the OSS/BSS and the NFVO, and the NFVO sends the final decision results to the VIM through an interface between the NFVO and the VIM, for example, an approach 3 in FIG. 9.

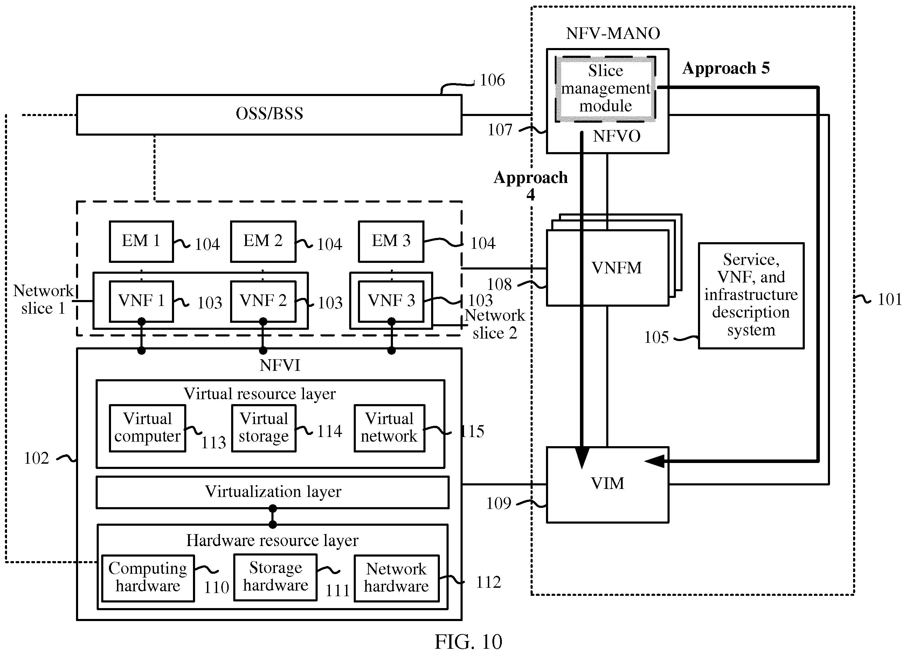

If the slice management module is deployed in the NFVO, the slice management module may send the final decision results to the VIM through an interface between the NFVO and the VIM, for example, an approach 4 in FIG. 10; or the slice management module may send the final decision results to the VNFM through an interface between the NFVO and the VNFM, and then the VNFM sends the final decision results to the VIM through an interface between the VNFM and the VIM, for example, an approach 5 in FIG. 10.

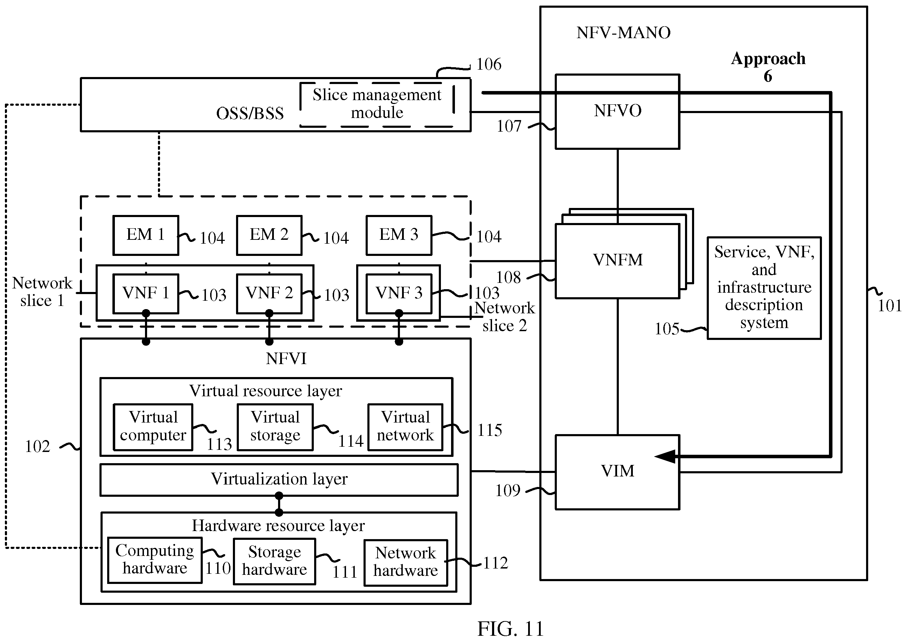

If the slice management module is deployed in the OSS/BSS, the slice management module may send the final decision results to the NFVO through an interface between the OSS/BSS and the NFVO, and then the NFVO forwards the final decision results to the VIM through an interface between the NFVO and the VIM, for example, an approach 6 in FIG. 11.

To describe the technical solution of this application more clearly, three network slices are used as an example in this embodiment. A most simple method for allocating resources between network slices is described through load changes of the three network slices and changes of quantities of instances included in the three network slice. It should be noted that, this embodiment is only an implementation of this application and does not constitute a limitation on this application.

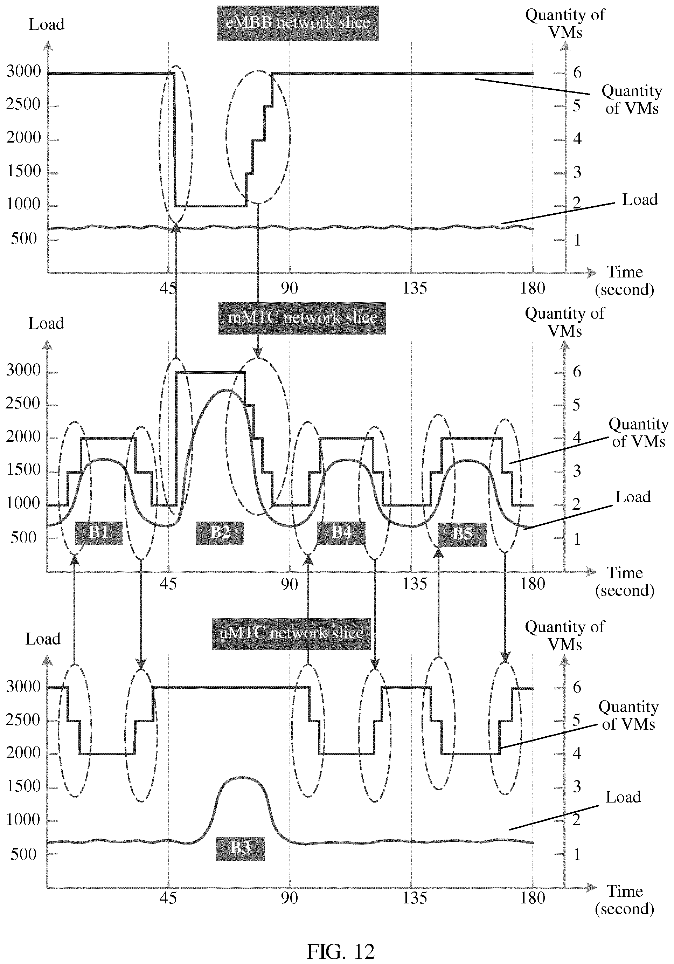

As shown in FIG. 12, in an initial state (for example, 0 seconds to 45 seconds in FIG. 12), both an eMBB network slice and an ultra-reliable machine type communication (Ultra-reliable MTC, uMTC for short) network slice are in a lightly-loaded state. Because a scale-in threshold is not reached, a scale-in action is not triggered. Load burst periodically occurs on an mMTC network slice, separately at positions B1, B2, B4, and B5 in FIG. 12. Load burst occurs on the uMTC network slice at a position B3.

The slice management module makes the following decisions based on statuses of the three network slices.

At the position B1 in FIG. 12, an independent decision result of the mMTC network slice is scale-out. In this case, the uMTC network slice is in a lightly-loaded state. A final decision result of the slice management module is to perform passive scale-in on the uMTC network slice, to allocated two VMs from the uMTC network slice to the mMTC network slice for use. Between the position B1 and the position B2 in FIG. 12, when load of the mMTC network slice is in a falling trend, the slice management module performs scale-in on the mMTC network slice, and allocates two VMs from the mMTC network slice and returns the two VMs to the uMTC network slice.

Similarly, at the position B2 in FIG. 12, a load burst degree of the mMTC network slice is higher, and a plurality of instances needs to be added at a time. In this case, the slice management module has two selections: to allocate resources from the eMBB network slice, or to allocate resources from the uMTC network slice. The slice management module predicts load change trends of the eMBB network slice and the uMTC network slice in combination with a prediction algorithm, and a prediction result indicates that the load of the uMTC network slice will change at the position B3. If resources are allocated from the uMTC network slice, the uMTC network slice is contrary to an SLA indicator of the uMTC network slice due to an excessive load amount at the position B3, and therefore the final decision result is to allocate four VMs from the eMBB network slice to the mMTC network slice.

Final decision results at the position B4 and the position B5 in FIG. 12 are similar to the final decision results at the position B1 and the position B2. Details are not described herein again.

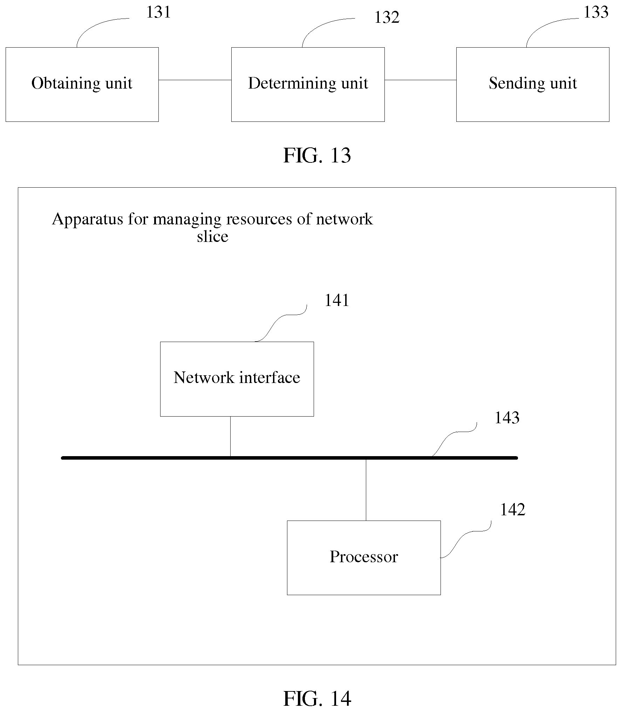

Based on the method for managing resources of a network slice provided above in this application, this application further provides an apparatus for managing resources of a network slice. As shown in FIG. 13, the apparatus for managing resources of a network slice includes an obtaining unit 131, a determining unit 132, and a sending unit 133.

The obtaining unit 131 is configured to obtain independent decision results of a plurality of network slices, where the independent decision result includes scale-out, scale-in, or keeping a quantity of instances unchanged.

The determining unit 132 is configured to: if the independent decision results of the plurality of network slices are not completely consistent, determine final decision results for the network slices based on the independent decision results of the plurality of network slices.

The sending unit 133 is configured to send the final decision results to a VIM, where the final decision results are used to instruct to allocate resource of a first network slice in the plurality of network slices to a second network slice in the plurality of network slices, and an independent decision result of the first network slice is scale-in, and an independent decision result of the second network slice is keeping a quantity of instances unchanged or scale-out; or an independent decision result of the first network slice is keeping a quantity of instances unchanged, and an independent decision result of the second network slice is scale-out.

Optionally, the apparatus may further include:
a receiving unit, configured to: before the obtaining unit 131 obtains the independent decision results of the plurality of network slices, receive a request for instructing to create a network slice template, where the network slice template includes a resource orchestration ratio parameter, and the resource orchestration ratio parameter is a maximum resource ratio of network slice instances allowed to be shared;
a template creation unit, configured to create the network slice template based on the request; and
an instance creation unit, configured to create, based on the network slice template, network slice instances included in the first network slice.

Optionally, before the determining unit 132 determines the final decision results for the network slices based on the independent decision results of the plurality of network slices, the obtaining unit 131 is further configured to: obtain a total quantity of resources occupied by the first network slice and a resource orchestration ratio parameter value of the first network slice, so that the determining unit 132 determines that a quantity of the resources allocated from the first network slice to the second network slice is not greater than a product of the total quantity of resources occupied by the first network slice and the resource orchestration ratio parameter value of the first network slice, where the resource orchestration ratio parameter value of the first network slice is a minimum value of resource orchestration ratio parameter values of all the network slice instances included in the first network slice.

Optionally, before the determining unit 132 determines the final decision results for the network slices based on the independent decision results of the plurality of network slices, the obtaining unit 131 may further be configured to: obtain a service level agreement SLA indicator of the first network slice; and obtain a predicted service indicator of the first network slice after the resources of the first network slice are allocated to the second network slice.

Correspondingly, before determining the final decision results for the network slices, the determining unit 132 is further configured to: determine that the predicted service indicator of the first network slice is not contrary to the SLA indicator of the first network slice.

Optionally, before the determining unit 132 determines the final decision results for the network slices based on the independent decision results of the plurality of network slices, the obtaining unit 131 may further be configured to: obtain a predicted independent decision result of the first network slice.

Correspondingly, the determining unit 132 is specifically configured to: if the predicted independent decision result of the first network slice is not scale-out, determine to allocate the resources of the first network slice to the second network slice; or if the predicted independent decision result of the first network slice is scale-out, determine not to allocate the resources of the first network slice to the second network slice.

Optionally, when obtaining the independent decision results of the plurality of network slices, the obtaining unit 131 is specifically configured to: receive the independent decision result sent by each of the plurality of network slices; or receive a service indicator and a resource indicator sent by each of the plurality of network slices, and determine the independent decision result of each network slice based on the service indicator and the resource indicator of each network slice.

Optionally, the apparatus may be deployed in a VNFM; or the apparatus may be deployed in an NFVO; or the apparatus may be deployed in an OSS/BSS.

Optionally, if the apparatus is deployed in the VNFM, the sending unit 133 sends the final decision results to the VIM through an interface between the VNFM and the VIM; or the sending unit 133 sends the final decision results to the NFVO through an interface between the VNFM and the NFVO, and then the NFVO forwards the final decision results to the VIM through an interface between the NFVO and the VIM; or the sending unit 133 sends the final decision results to the OSS/BSS, and the OSS/BSS sends the final decision results to the NFVO through an interface between the OSS/BSS and the NFVO, and then the NFVO sends the final decision results to the VIM through an interface between the NFVO and the VIM.

Optionally, if the apparatus is deployed in the NFVO, the sending unit 133 sends the final decision results to the VIM through an interface between the NFVO and the VIM; or the sending unit 133 sends the final decision results to the VNFM through an interface between the NFVO and the VNFM, and then the VNFM sends the final decision results to the VIM through an interface between the VNFM and the VIM.

Optionally, if the apparatus is deployed in the OSS/BSS, the sending unit 133 sends the final decision results to the NFVO through an interface between the OSS/BSS and the NFVO, and then the NFVO forwards the final decision results to the VIM through an interface between the NFVO and the VIM.

For content not described in detail in this embodiment, refer to the descriptions of the slice management module in the method in FIG. 6, and details are not described herein again.

It should be noted that the unit division in this embodiment of this application is an example, and is merely logical function division and may be other division in actual implementation. The functional units in this embodiment of this application may be integrated into one processing unit, or each of the units may exist alone physically, or two or more units are integrated into one unit. The integrated unit may be implemented in a form of hardware, or may be implemented in a form of a software functional unit.

Based on the method for managing resources of a network slice provided above, this application further provides an apparatus for managing resources of a network slice. As shown in FIG. 14, the apparatus includes a network interface 141 and a processor 142. For example, the network interface 141 and the processor 142 are connected to each other by using a bus 143.

The processor 142 is configured to perform the following operations:
obtaining independent decision results of a plurality of network slices, where the independent decision result includes scale-out, scale-in, or keeping a quantity of instances unchanged; if the independent decision results of the plurality of network slices are not completely consistent, determining final decision results for the network slices based on the independent decision results of the plurality of network slices; and sending the final decision results to a VIM through the network interface 141, where the final decision results are used to instruct to allocate resource of a first network slice in the plurality of network slices to a second network slice in the plurality of network slices, and an independent decision result of the first network slice is scale-in, and an independent decision result of the second network slice is keeping a quantity of instances unchanged or scale-out; or an independent decision result of the first network slice is keeping a quantity of instances unchanged, and an independent decision result of the second network slice is scale-out.

The network interface 141 may be a wired interface such as a fiber distributed data interface (English: Fiber Distributed Data Interface, FDDI for short) or an Ethernet (English: Ethernet) interface. Alternatively, the network interface 141 may be a wireless interface, for example, a wireless local area network interface.

The processor 142 may be a general-purpose processor, including a central processing unit (English: central processing unit, CPU for short), a network processor (English: network processor, NP for short), and the like, or may further be a digital signal processor (English: digital signal processor, DSP for short), an application-specific integrated circuit (English: application-specific integrated circuit, ASIC for short), a field-programmable gate array (English: field-programmable gate array, FPGA for short) or another programmable logic device.

When the processor 142 is a CPU, the apparatus may further include a memory configured to store a program. Specifically, the program may include program code, where the program code includes a computer operation instruction. The memory may include a random access memory (English: random access memory, RAM for short), and may further include a non-volatile memory (English: non-volatile memory), for example, at least one magnetic disk storage. The processor 142 executes program code stored in the memory, to implement the foregoing functions.

In conclusion, in the technical solution in this application, resources are allocated more properly by using a feature that peaks and valleys of load of network slices overlap, so that resources can be coordinated from another network slice whose independent decision result is scale-in or is keeping a quantity of instances unchanged to a network slice whose independent decision result is scale-out, or resources can be coordinated from another network slice whose independent decision result is scale-in to a network slice whose independent decision result is keeping a quantity of instances unchanged, and therefore a network slice whose capacity needs to be increased does not need to request for new resources from the infrastructure, thereby improving resource utilization of the infrastructure and reducing resource procurement costs of a slice tenant.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams, and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specified function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn of the basic inventive concept. Therefore, the following claims are intended to be construed as to cover the preferred embodiments and all changes and modifications falling within the scope of the present invention.

Obviously, persons skilled in the art can make various modifications and variations to the embodiments of the present invention without departing from the scope of the embodiments of the present invention. The present invention is intended to cover these modifications and variations provided that they fall within the scope of protection defined by the following claims.

## Claims

1. A method for managing resources of a network slice, comprising:
obtaining (601), by a slice management module (501), independent decision results of a plurality of network slices respectively, wherein the independent decision result comprises scale-out, scale-in, or keeping a quantity of instances unchanged;
if the independent decision results of the plurality of network slices are not completely consistent, determining (602), by the slice management module (501), final decision results for the network slices based on the independent decision results of the plurality of network slices; and
sending (603), by the slice management module (501), the final decision results to a virtualized infrastructure manager, VIM (109, 508), wherein the final decision results are used to instruct to allocate resource of a first network slice in the plurality of network slices to a second network slice in the plurality of network slices, and
an independent decision result of the first network slice is (502) scale-in, and an independent decision result of the second network slice is keeping a quantity of instances unchanged or scale-out; or
an independent decision result of the first network slice is (502) keeping a quantity of instances unchanged, and an independent decision result of the second network slice is scale-out,
wherein before the obtaining, by a slice management module (501), independent decision results of a plurality of network slices respectively, the method further comprises:
receiving, by the slice management module (501), a request for instructing to create a network slice template, wherein the network slice template comprises a resource orchestration ratio parameter, and the resource orchestration ratio parameter is a maximum resource ratio of network slice instances (505) allowed to be shared;
creating, by the slice management module (501), the network slice template based on the request; and
creating, by the slice management module (501) based on the network slice template, network slice instances (505) comprised in the first network slice.

2. The method according to claim 1, wherein before the determining, by the slice management module (501), final decision results for the network slices based on the independent decision results of the plurality of network slices, the method further comprises:
obtaining, by the slice management module (501), a total quantity of resources occupied by the first network slice and a resource orchestration ratio parameter value of the first network slice, so that a quantity of the resources allocated from the first network slice to the second network slice is (502) not greater than a product of the total quantity of resources occupied by the first network slice and the resource orchestration ratio parameter value of the first network slice, wherein
the resource orchestration ratio parameter value of the first network slice is (502) a minimum value of resource orchestration ratio parameter values of all the network slice instances (505) comprised in the first network slice.

3. The method according to any one of claim 1 or claim 2, wherein before the determining, by the slice management module (501), final decision results for the network slices based on the independent decision results of the plurality of network slices, the method further comprises:
obtaining, by the slice management module (501), a service level agreement, SLA, indicator of the first network slice;
obtaining, by the slice management module (501), a predicted service indicator of the first network slice after the resources of the first network slice are allocated to the second network slice; and
determining, by the slice management module (501), that the predicted service indicator of the first network slice is (502) not contrary to the SLA indicator of the first network slice.

4. The method according to any one of claims 1 to 3, wherein the determining, by the slice management module (501), final decision results for the network slices based on the independent decision results of the plurality of network slices comprises:
obtaining, by the slice management module (501), a predicted independent decision result of the first network slice; and
if the predicted independent decision result of the first network slice is (502) not scale-out, determining, by the slice management module (501), to allocate the resources of the first network slice to the second network slice; or
if the predicted independent decision result of the first network slice is (502) scale-out, determining, by the slice management module (501), not to allocate the resources of the first network slice to the second network slice.

5. The method according to any one of claims 1 to 4, wherein
the slice management module (501) is deployed in a virtualized network function manager, VNFM (108); or
the slice management module (501) is deployed in a network functions virtualization orchestrator, NFVO (107); or
the slice management module (501) is deployed in an operation support system, OSS/business support system, BSS.

6. The method according to any one of claims 1 to 5, wherein the obtaining, by a slice management module (501), independent decision results of a plurality of network slices respectively comprises:
receiving, by the slice management module (501), the independent decision result sent by each of the plurality of network slices; or
receiving, by the slice management module (501), a service indicator and a resource indicator sent by each of the plurality of network slices, and determining the independent decision result of each network slice based on the service indicator and the resource indicator of each network slice.

7. The method according to any one of claims 1 to 6, wherein if the slice management module (501) is deployed in the VNFM (108), the slice management module sends the final decision results to the VIM (109, 508) through an interface between the VNFM and the VIM; or
the slice management module (501) sends the final decision results to the NFVO (107) through an interface between the VNFM (108) and the NFVO, and then the NFVO forwards the final decision results to the VIM (109, 508) through an interface between the NFVO and the VIM; or
the slice management module (501) sends the final decision results to the OSS/BSS, and the OSS/BSS sends the final decision results to the NFVO (107) through an interface between the OSS/BSS and the NFVO, and then the NFVO sends the final decision results to the VIM (109, 508) through an interface between the NFVO and the VIM;
if the slice management module (501) is deployed in the NFVO (107), the slice management module sends the final decision results to the VIM (109, 508) through an interface between the NFVO and the VIM; or
the slice management module (501) sends the final decision results to the VNFM (108) through an interface between the NFVO (107) and the VNFM, and then the VNFM sends the final decision results to the VIM (109, 508) through an interface between the VNFM and the VIM; or
if the slice management module (501) is deployed in the OSS/BSS, the slice management module sends the final decision results to the NFVO (107) through an interface between the OSS/BSS and the NFVO, and then the NFVO forwards the final decision results to the VIM (109, 508) through an interface between the NFVO and the VIM.

8. An apparatus for managing resources of a network slice, configured to perform the method according to any one of claims 1 to 7.

## Patentansprüche

1. Verfahren zum Verwalten von Ressourcen eines Netzwerk-Slices, das Folgendes umfasst:
Erhalten (601) von unabhängigen Entscheidungsergebnissen jeweils von einer Vielzahl von Netzwerk-Slices durch ein Slice-Verwaltungsmodul (501), wobei das unabhängige Entscheidungsergebnis ein Erweitern, Verkleinern oder unverändertes Beibehalten einer Menge von Instanzen umfasst;
falls die unabhängigen Entscheidungsergebnisse der Vielzahl von Netzwerk-Slices nicht vollkommen konsistent sind, Bestimmen (602) von finalen Entscheidungsergebnissen für die Netzwerk-Slices auf Grundlage der unabhängigen Entscheidungsergebnisse der Vielzahl von Netzwerk-Slices durch das Slice-Verwaltungsmodul (501); und
Senden (603) durch das Slice-Verwaltungsmodul (501) der finalen Entscheidungsergebnisse an einen virtualisierten Infrastrukturmanager (VIM, 109, 508), wobei die finalen Entscheidungsergebnisse verwendet werden, um dazu anzuweisen, eine Ressource eines ersten Netzwerk-Slices der Vielzahl von Netzwerk-Slices einem zweiten Netzwerk-Slice der Vielzahl von Netzwerk-Slices zuzuordnen; und
wobei ein unabhängiges Entscheidungsergebnis des ersten Netzwerk-Slices ein Verkleinern ist (502), und ein unabhängiges Entscheidungsergebnis des zweiten Netzwerk-Slices ein unverändertes Beibehalten einer Menge von Instanzen oder ein Erweitern ist; oder
wobei ein unabhängiges Entscheidungsergebnis des ersten Netzwerk-Slices ein unverändertes Beibehalten einer Menge von Instanzen ist (502) und ein unabhängiges Entscheidungsergebnis des zweiten Netzwerk-Slices ein Erweitern ist,
wobei das Verfahren vor dem Erhalten von jeweils den unabhängigen Entscheidungsergebnissen der Vielzahl von Netzwerk-Slices durch ein Slice-Verwaltungsmodul (501) Folgendes umfasst:
Empfangen einer Anforderung nach einem Anweisen, eine Netzwerk-Slice-Vorlage zu erzeugen, durch das Slice-Verwaltungsmodul (501), wobei die Netzwerk-Slice-Vorlage einen Ressourcenorchestrierungsverhältnisparameter umfasst und der Ressourcenorchestrierungsverhältnisparameter ein maximales Ressourcenverhältnis von Netzwerk-Slice-Instanzen (505) ist, die geteilt werden dürfen;
Erzeugen durch das Slice-Verwaltungsmodul (501) der Netzwerk-Slice-Vorlage auf Grundlage der Anforderung; und
Erzeugen durch das Slice-Verwaltungsmodul (501) auf Grundlage der Netzwerk-Slice-Vorlage von Netzwerk-Slice-Instanzen (505), die in dem ersten Netzwerk-Slice enthalten sind.

2. Verfahren nach Anspruch 1, wobei das Verfahren vor dem Bestimmen von finalen Entscheidungsergebnissen für Netzwerk-Slices auf Grundlage der unabhängigen Entscheidungsergebnisse der Vielzahl von Netzwerk-Slices durch das Slice-Verwaltungsmodul (501) ferner Folgendes umfasst:
Erhalten einer Gesamtmenge von Ressourcen, die von dem ersten Netzwerk-Slice belegt werden und eines Ressourcenorchestrierungsverhältnisparameterwerts des ersten Netzwerk-Slices durch das Slice-Verwaltungsmodul (501), sodass eine Menge der Ressourcen, die dem zweiten Netzwerk-Slice von dem ersten Netzwerk-Slice zugeordnet ist (502), nicht größer ist als ein Produkt der Gesamtmenge von Ressourcen, die von dem ersten Netzwerk-Slice belegt wird und dem Ressourcenorchestrierungsverhältnisparameterwert des ersten Netzwerk-Slices, wobei
der Ressourcenorchestrierungsverhältnisparameterwert des ersten Netzwerk-Slices ein Mindestwert von Ressourcenorchestrierungsverhältnisparameterwerten von allen Netzwerk-Slice-Instanzen (505) ist (502), die in dem ersten Netzwerk-Slice enthalten sind.

3. Verfahren nach Anspruch 1 oder Anspruch 2, wobei das Verfahren vor dem Bestimmen von finalen Entscheidungsergebnissen für die Netzwerk-Slices auf Grundlage der unabhängigen Entscheidungsergebnisse der Vielzahl von Netzwerk-Slices durch das Slice-Verwaltungsmodul (501) ferner Folgendes umfasst:
Erhalten eines Dienstgütevereinbarungs(SLA)-Indikators des ersten Netzwerk-Slices durch das Slice-Verwaltungsmodul (501);
Erhalten eines vorhergesagten Dienstindikators des ersten Netzwerk-Slices, nachdem die Ressourcen des ersten Netzwerk-Slices dem zweiten Netzwerk-Slice zugeordnet sind, durch das Slice-Verwaltungsmodul (501); und
Bestimmen durch das Slice-Verwaltungsmodul (501), dass der vorhergesagte Dienstindikator des ersten Netzwerk-Slices kein Gegenteil des SLA-Indikators des ersten Netzwerk-Slices ist (502) .

4. Verfahren nach einem der Ansprüche 1 bis 3, wobei das Bestimmen der finalen Entscheidungsergebnisse für die Netzwerk-Slices auf Grundlage der unabhängigen Entscheidungsergebnisse der Vielzahl von Netzwerk-Slices durch das Slice-Verwaltungsmodul (501) Folgendes umfasst:
Erhalten eines vorhergesagten unabhängigen Entscheidungsergebnisses des ersten Netzwerk-Slices durch das Slice-Verwaltungsmodul (501); und
falls das vorhergesagte unabhängige Entscheidungsergebnis des ersten Netzwerk-Slices kein Erweitern ist (502), Bestimmen durch das Slice-Verwaltungsmodul (501), die Ressourcen des ersten Netzwerk-Slices dem zweiten Netzwerk-Slice zuzuordnen; oder
falls das vorhergesagte unabhängige Entscheidungsergebnis des ersten Netzwerk-Slices ein Erweitern ist (502), Bestimmen durch das Slice-Verwaltungsmodul (501), die Ressourcen des ersten Netzwerk-Slices nicht dem zweiten Netzwerk-Slice zuzuordnen.

5. Verfahren nach einem der Ansprüche 1 bis 4, wobei das Slice-Verwaltungsmodul (501) in einem virtualisierten Netzwerkfunktionsmanager (VNFM, 108) eingesetzt ist; oder
das Slice-Verwaltungsmodul (501) in einem Orchestrator für Netzwerkfunktionsvirtualisierung (NFVO, 107) eingesetzt ist; oder
das Slice-Verwaltungsmodul (501) in einem Operation-Support-System (OSS)/Business-Support-System (BSS) eingesetzt ist.

6. Verfahren nach einem der Ansprüche 1 bis 5, wobei das Erhalten von jeweils unabhängigen Entscheidungsergebnissen einer Vielzahl von Netzwerk-Slices durch ein Slice-Verwaltungsmodul (501) Folgendes umfasst:
Empfangen des unabhängigen Entscheidungsergebnisses, das von jedem der Vielzahl von Netzwerk-Slices gesendet wird, durch das Slice-Verwaltungsmodul (501); oder
Empfangen eines Dienstindikators und eines Ressourcenindikators, die von der Vielzahl von Netzwerk-Slices gesendet werden, durch das Slice-Verwaltungsmodul (501) und Bestimmen des unabhängigen Entscheidungsergebnisses von jedem Netzwerk-Slice auf Grundlage des Dienstindikators und des Ressourcenindikators von jedem Netzwerk-Slice.

7. Verfahren nach einem der Ansprüche 1 bis 6, wobei das Slice-Verwaltungsmodul, falls das Slice-Verwaltungsmodul (501) in dem VNFM (108) eingesetzt ist, die finalen Entscheidungsergebnisse durch eine Schnittstelle zwischen dem VNFM und dem VIM an den VIM (109, 508) sendet; oder
das Slice-Verwaltungsmodul (501) die finalen Entscheidungsergebnisse durch eine Schnittstelle zwischen dem VNFM (108) und dem NFVO an den NFVO (107) sendet und der NFVO danach die finalen Entscheidungsergebnisse durch eine Schnittstelle zwischen dem NFVO und dem VIM an den VIM (109, 508) weiterleitet; oder
das Slice-Verwaltungsmodul (501) die finalen Entscheidungsergebnisse an das OSS/BSS sendet und das OSS/BSS die finalen Entscheidungsergebnisse durch eine Schnittstelle zwischen dem OSS/BSS und dem NFVO an den NFVO (107) sendet und der NFVO danach die finalen Entscheidungsergebnisse durch eine Schnittstelle zwischen dem NFVO und dem VIM an den VIM (109, 508) sendet;
falls das Slice-Verwaltungsmodul (501) in dem NFVO (107) eingesetzt ist, das Slice-Verwaltungsmodul die finalen Entscheidungsergebnisse durch eine Schnittstelle zwischen dem NFVO und dem VIM an den VIM (109, 508) sendet; oder
das Slice-Verwaltungsmodul (501) die finalen Entscheidungsergebnisse durch eine Schnittstelle zwischen dem NFVO (107) und dem VNFM an den VNFM (108) sendet und der VNFM danach die finalen Entscheidungsergebnisse durch eine Schnittstelle zwischen dem VNFM und dem VIM an den VIM (109, 508) sendet; oder
falls das Slice-Verwaltungsmodul (501) in dem OSS/BSS eingesetzt ist, das Slice-Verwaltungsmodul die finalen Entscheidungsergebnisse durch eine Schnittstelle zwischen dem OSS/BSS und dem NFVO an den NFVO (107) sendet und der NFVO danach die finalen Entscheidungsergebnisse über eine Schnittstelle zwischen dem NFVO und dem VIM an den VIM (109, 508) weiterleitet.

8. Vorrichtung zum Verwalten von Ressourcen eines Netzwerk-Slices, die dazu konfiguriert ist, das Verfahren nach einem der Ansprüche 1 bis 7 durchzuführen.

## Revendications

1. Procédé de gestion de ressources d'une tranche de réseau, comprenant :
l'obtention (601), par un module de gestion de tranches (501), de résultats de décision indépendants d'une pluralité de tranches de réseau respectivement, dans lequel le résultat de décision indépendant comprend l'extension, la contraction, ou le maintien d'une quantité d'instances inchangée ;
si les résultats de décision indépendants de la pluralité de tranches de réseau ne sont pas totalement cohérents, la détermination (602), par le module de gestion de tranches (501), de résultats de décision finaux pour les tranches de réseau d'après les résultats de décision indépendants de la pluralité de tranches de réseau ; et
l'envoi (603), par le module de gestion de tranches (501), des résultats de décision finaux à un gestionnaire d'infrastructure virtualisé, VIM (109, 508), dans lequel les résultats de décision finaux sont utilisés pour donner l'instruction d'allouer une ressource d'une première tranche de réseau dans la pluralité de tranches de réseau à une seconde tranche de réseau dans la pluralité de tranches de réseau, et
un résultat de décision indépendant de la première tranche de réseau est (502) la contraction, et un résultat de décision indépendant de la seconde tranche de réseau est le maintien d'une quantité d'instances inchangée ou l'extension ; ou
un résultat de décision indépendant de la première tranche de réseau est (502) le maintien d'une quantité d'instances inchangée, et un résultat de décision indépendant de la seconde tranche de réseau est l'extension,
dans lequel avant l'obtention, par un module de gestion de tranches (501), de résultats de décision indépendants d'une pluralité de tranches de réseau respectivement, le procédé comprend en outre :
la réception, par le module de gestion de tranches (501), d'une demande d'instruction de création d'un modèle de tranche de réseau, dans lequel le modèle de tranche de réseau comprend un paramètre de rapport d'orchestration de ressource, et le paramètre de rapport d'orchestration de ressource est un rapport de ressource maximal d'instances de tranche de réseau (505) allouées pour être partagées ;
la création, par le module de gestion de tranches (501), du modèle de tranche de réseau d'après la demande ; et
la création, par le module de gestion de tranches (501) d'après le modèle de tranche de réseau, d'instances de tranche de réseau (505) comprises dans la première tranche de réseau.

2. Procédé selon la revendication 1, dans lequel avant la détermination, par le module de gestion de tranches (501), de résultats de décision finaux pour les tranches de réseau d'après les résultats de décision indépendants de la pluralité de tranches de réseau, le procédé comprend en outre :
l'obtention, par le module de gestion de tranches (501), d'une quantité totale de ressources occupées par la première tranche de réseau et d'une valeur de paramètre de rapport d'orchestration de ressource de la première tranche de réseau, de sorte qu'une quantité de ressources allouées de la première tranche de réseau à la seconde tranche de réseau (502) ne soit pas supérieure à un produit de la quantité totale de ressources occupées par la première tranche de réseau et de la valeur de paramètre de rapport d'orchestration de ressource de la première tranche de réseau, dans lequel
la valeur de paramètre de rapport d'orchestration de ressource de la première tranche de réseau (502) est une valeur minimale de valeurs de paramètre de rapport d'orchestration de ressource de toutes les instances de tranche de réseau (505) comprises dans la première tranche de réseau.

3. Procédé selon l'une quelconque de la revendication 1 ou de la revendication 2, dans lequel avant la détermination, par le module de gestion de tranches (501), de résultats de décision finaux pour les tranches de réseau d'après les résultats de décision indépendants de la pluralité de tranches de réseau, le procédé comprend en outre :
l'obtention, par le module de gestion de tranches (501), d'un indicateur d'accord sur le niveau de service, SLA, de la première tranche de réseau ;
l'obtention, par le module de gestion de tranches (501), d'un indicateur de service prédit de la première tranche de réseau après allocation des ressources de la première tranche de réseau à la seconde tranche de réseau ; et
la détermination, par le module de gestion de tranches (501), que l'indicateur de service prédit de la première tranche de réseau (502) n'est pas contraire à l'indicateur SLA de la première tranche de réseau.

4. Procédé selon l'une quelconque des revendications 1 à 3, dans lequel la détermination, par le module de gestion de tranches (501), de résultats de décision finaux pour les tranches de réseau d'après les résultats de décision indépendants de la pluralité de tranches de réseau comprend :
l'obtention, par le module de gestion de tranches (501), d'un résultat de décision indépendant prédit de la première tranche de réseau ; et
si le résultat de décision indépendant prédit de la première tranche de réseau (502) n'est pas l'extension, la détermination, par le module de gestion de tranches (501), d'allouer les ressources de la première tranche de réseau à la seconde tranche de réseau ; ou
si le résultat de décision indépendant prédit de la première tranche de réseau (502) est la contraction, la détermination, par le module de gestion de tranches (501), de ne pas allouer les ressources de la première tranche de réseau à la seconde tranche de réseau.

5. Procédé selon l'une quelconque des revendications 1 à 4, dans lequel
le module de gestion de tranches (501) est déployé dans un gestionnaire de fonction de réseau virtualisé, VNFM (108) ; ou le module de gestion de tranches (501) est déployé dans un orchestrateur de virtualisation de fonctions de réseau, NFVO (107) ; ou
le module de gestion de tranches (501) est déployé dans un système d'aide à l'exploitation, OSS/système d'aide à l'activité commerciale, BSS.

6. Procédé selon l'une quelconque des revendications 1 à 5, dans lequel l'obtention, par un module de gestion de tranches (501), de résultats de décision indépendants d'une pluralité de tranches de réseau comprend respectivement :
la réception, par le module de gestion de tranches (501), du résultat de décision indépendant envoyé par chacune de la pluralité de tranches de réseau ; ou
la réception, par le module de gestion de tranches (501), d'un indicateur de service et d'un indicateur de ressource envoyés par chacune de la pluralité de tranches de réseau, et la détermination du résultat de décision indépendant de chaque tranche de réseau d'après l'indicateur de service et l'indicateur de ressource de chaque tranche de réseau.

7. Procédé selon l'une quelconque des revendications 1 à 6, dans lequel si le module de gestion de tranches (501) est déployé dans le VNFM (108), le module de gestion de tranches envoie les résultats de décision finaux au VIM (109, 508) par le biais d'une interface entre le VNFM et le VIM ; ou
le module de gestion de tranches (501) envoie les résultats de décision finaux au NFVO (107) par le biais d'une interface entre le VNFM (108) et le NFVO, puis le NFVO réachemine les résultats de décision finaux au VIM (109, 508) par le biais d'une interface entre le NFVO et le VIM ; ou
le module de gestion de tranches (501) envoie les résultats de décision finaux à l'OSS/BSS, et l'OSS/BSS envoie les résultats de décision finaux au NFVO (107) par le biais d'une interface entre l'OSS/BSS et le NFVO, puis le NFVO envoie les résultats de décision finaux au VIM (109, 508) par le biais d'une interface entre le NFVO et le VIM ;
si le module de gestion de tranches (501) est déployé dans le NFVO (107), le module de gestion de tranches envoie les résultats de décision finaux au VIM (109, 508) par le biais d'une interface entre le NFVO et le VIM ; ou
le module de gestion de tranches (501) envoie les résultats de décision finaux au VNFM (108) par le biais d'une interface entre le NFVO (107) et le VNFM, puis le VNFM envoie les résultats de décision finaux au VIM (109, 508) par le biais d'une interface entre le VNFM et le VIM ; ou
si le module de gestion de tranches (501) est déployé dans l'OSS/BSS, le module de gestion de tranches envoie les résultats de décision finaux au NFVO (107) par le biais d'une interface entre l'OSS/BSS et le NFVO, puis le NFVO réachemine les résultats de décision finaux au VIM (109, 508) par le biais d'une interface entre le NFVO et le VIM.

8. Appareil de gestion de ressources d'une tranche de réseau, conçu pour réaliser le procédé selon l'une quelconque des revendications 1 à 7.
